Europäisches Patentamt

European Patent Office

Office européen des brevets

(11) Numéro de publication: **0 428 449 A2**

## DEMANDE DE BREVET EUROPEEN

(21) Numéro de dépôt: 90403229.9

(51) Int. Cl.5: **G10L 5/06**

(22) Date de dépôt: **15.11.90**

(30) Priorité: **15.11.89 FR 8914986**

(43) Date de publication de la demande:
**22.05.91 Bulletin 91/21**

(84) Etats contractants désignés:
**DE ES GB IT NL SE**

(71) Demandeur: **Cibiel, Jean-Yves**
**3, square Arago, Parc Montaigne**
**F-78330 Fontenay le Fleury(FR)**

Demandeur: **Vaissie, Jean**
**10, rue Chateaubriant**
**F-78120 Rambouillet(FR)**

(72) Inventeur: **Cibiel, Jean-Yves**
**3, square Arago, Parc Montaigne**
**F-78330 Fontenay le Fleury(FR)**
Inventeur: **Vaissie, Jean**
**10, rue Chateaubriant**
**F-78120 Rambouillet(FR)**

(74) Mandataire: **Chêne, Philippe et al**
**BUREAU DES BREVETS ET INVENTIONS DE**
**LA DELEGATION GENERALE POUR**
**L'ARMEMENT, 26, Boulevard Victor, Paris**
**F-00460 Armées(FR)**

(54) **Procédé de reconnaissance de formes, notamment de reconnaissance vocale multilocuteur du langage naturel et dispositif pour la mise en oeuvre de ce procédé.**

(57) L'invention concerne un procédé de reconnaissance de formes comprenant une première étape d'apprentissage au cours de laquelle on mémorise une somme d'informations extraites de formes connues et l'on définit un seuil de reconnaissance et une deuxième étape consistant à comparer à ce seuil les informations extraites de la forme à reconnaître.

Ce procédé est caractérisé en ce que l'on transforme les informations extraites de formes connues et celles extraites de la forme à reconnaître en vecteurs normes et en ce que l'on applique au vecteur normé issu de la forme à reconnaître une formule sommatoire faisant intervenir tous les vecteurs issus d'exemples d'une même forme et qui permet la reconnaissance de la forme inconnue si la valeur obtenue est supérieure ou égale à la valeur du seuil de reconnaissance déterminé pendant l'apprentissage.

Application à la commande vocale.

EP 0 428 449 A2

FIG. 1

La présente invention concerne un procédé de reconnaissance de formes, notamment de reconnaissance vocale multilocuteur du langage naturel et un dispositif pour la mise en oeuvre de ce procédé.

L'invention peut s'appliquer à la commande vocale, à la reconnaissance de signaux issus de senseurs divers, tels que des sonars, des caméras produisant des images digitalisées, et, de façon générale, de tout type de signal détectable par un senseur sous forme d'un ensemble d'informations analogiques.

En ce qui concerne la reconnaissance du langage naturel, deux approches coexistent actuellement, à savoir la reconnaissance globale et la reconnaissance analytique.

La reconnaissance globale consiste à essayer de reconnaître une quantité finie de mots, de l'ordre de 20 à 3000 mots, dans leur ensemble.

Cette méthode suppose une étape d'apprentissage de chaque mot prononcé séparément par le locuteur, puis analysé,du point de vue temporel et/ou fréquentiel, puis mémorisé. La reconnaissance d'un mot prononcé est effectuée ensuite par des comparaisons entre l'image donnée par l'analyse de ce mot et les images mémorisées de tous les autres mots.

Un certain nombre de dispositifs fonctionnent suivant ce principe.

Les inconvénients de ces réalisations résident dans la limitation du vocabulaire, en ce qu'elles ne permettent pas la reconnaissance de plusieurs locuteurs (en raison de la capacité des mémoires et de la vitesse des comparaisons) ni, en général, la reconnaissance de mots enchaînés.

La deuxième méthode est la reconnaissance analytique.

Dans cette approche, on procède à un décodage acoustique des mots prononcés. On commence par numériser la phrase, puis on analyse le spectre pour y trouver des zones caractéristiques et, enfin, on cherche à trouver des indices pertinents pouvant être appliqués à la reconnaissance de tel ou tel phonème. La reconnaissance des phonèmes est suivie par celle des mots, puis des phrases, grâce à une succession de modules qui extraient la connaissance de façon de plus en plus élaborée : module phonétique, phonologique, lexical, syntaxique, sémantique, pragmatique. Chaque module produit un signal entaché d'erreurs et on compte sur le module suivant pour détecter et corriger les erreurs, au moins en partie.

Cependant, cette méthode de reconnaissance analytique présente un certain nombre d'inconvénients, notamment la nécessité d'une grande quantité de calculs due aux nombreux modules enchaînés, la complexité des systèmes de reconnaissance, puisqu'il faut traiter les aléas résultant des variations de prononciation, de rapidité d'élocution, l'explosion combinatoire due au grand nombre de mots existants et au fait que la reconnaissance ou la non reconnaissance d'un mot influe sur celle des suivants ou des précédents, les modules utilisés étant en général rétroactifs.

Ces méthodes de reconnaissance de la parole sont exposées notamment par Joseph Mariani, dans la Recherche, n° 170, octobre 1985, p. 1214.

D'autres méthodes sont basées sur l'utilisation de réseaux de neurones.

En effet, les réseaux de neurones commencent à être utilisés de façon expérimentale dans la reconnaissance de différents types de signaux : écriture, signaux sonar, signaux électriques obtenus après traitement et provenant de sources de tous types. L'état de la technique en matière de machines neuronales est notamment décrit dans la Recherche, n° 204, novembre 1988, Léon Personnaz, Gérard Dreyfus, Isabelle Guyon, p. 1362 à 1370. La caractéristique de leur mode de fonctionnement tel qu'il est conçu actuellement consiste en une étape d'apprentissage d'une liste de tous les stimuli à reconnaître, suivie de la présentation de stimuli inconnus qu'il faut comparer rapidement avec l'ensemble des stimuli connus.

En électronique, un réseau de neurones formels est constitué d'un ensemble de cellules interconnectées par des liaisons (synapses) dont la capacité à transmettre l'information est pondérée par un coefficient synaptique (le poids). Un tel réseau comporte toujours une couche de neurones d'entrée chargée de recevoir les signaux à traiter, et une couche de sortie chargée d'indiquer ce que le réseau a reconnu.

Le neurone est défini par ses forces synaptiques ou poids qui ont été calculées pendant l'apprentissage. Il réévalue sans arrêt son état de la façon suivante :
- il multiplie l'état de chacune de ses entrées par le poids correspondant.
- il fait la somme de toutes ces contributions.
- il compare cette somme à son seuil de basculement qui a été calculé pendant l'apprentissage.
- si cette somme est inférieure au seuil, il prend la valeur de sortie "-1",sinon il prend la valeur " + 1".

Les neurones d'entrée reçoivent avec ou sans pondération le signal à analyser, ils s'excitent ou s'inhibent, le cas échéant. La transmission se fait de proche en proche à tout le réseau via les interconnexions, et finit par atteindre la couche de sortie. L'état que prend celle-ci, c'est-à-dire la sortie de chacun des neurones de sortie, est l'indication de ce que le réseau a, ou n'a pas reconnu.

La connaissance contenue dans le réseau, et qui lui permet de reconnaître ou non des stimuli, est contenue dans les poids des interconnexions, les seuils des neurones et l'architecture physique du réseau ou géométrie des interconnexions.

Le choix de l'architecture résulte d'une recherche de la meilleure adaptation à un problème donné.

Les architectures les plus utilisées pour la reconnaissance de formes sont celles comprenant une couche d'entrée et une couche de sortie, et celles comprenant une couche d'entrée, une ou plusieurs couches intermédiaires, et une couche de sortie dans lesquelles le signal se propage dans une seule direction de l'entrée à la sortie.

Ce type de réseau est le plus fréquemment utilisé car il nécessite relativement peu de calculs en phase de reconnaissance et peut être réalisé de façon simple.

Cependant les réseaux de neurones posent des problèmes en raison de l'absence de théorie fiable permettant de calculer les bons poids et la bonne architecture pour un problème donné.

Ainsi lorsqu'un réseau est calculé, on ne sait pas dire pourquoi il fonctionne bien, ou mal, suivant les entrées présentées. On ne sait pas comment s'y est distribuée la connaissance.

Une autre conséquence de l'absence de théorie fiable est que les méthodes d'apprentissage sont longues et que leur convergence n'est pas assurée. Elles sont généralement incompatibles avec un apprentissage en temps réel tel qu'il a lieu, notamment, dans le cerveau humain.

En effet, les méthodes d'apprentissage sont toutes basées soit sur des procédés de classification, soit sur une rétropropagation du gradient d'erreur, comme décrit, notamment, dans I E E E Transactions on acoustics, speech and signal processing, vol. 37 n° 3 mars 89, Alexander Waitel, p. 328 à 339. On présente un exemple et on désire que la sortie du réseau soit égale à une valeur fixée ; si celle-ci n'est pas atteinte, on modifie les poids du réseau, c'est-à-dire la capacité des connexions à transmettre les signaux, de façon à s'en approcher. On agit ainsi de façon itérative sur tous les exemples à reconnaître, un grand nombre de fois, jusqu'à ce que le procédé converge. Le réseau est alors réputé avoir appris et il sait reconnaître, dans une certaine mesure, des stimuli inconnus mais ressemblant à l'un des exemples préalablement présentés.

La plupart des réseaux sont simulés sur ordinateur. Cependant, des composants neuronaux programmables commencent à apparaître sur le marché mais ils ne font pas actuellement l'objet d'application opérationnelle.

En résumé, les réalisations antérieures ont toutes pour inconvénient une grande complexité alliée à l'obligation de traiter rapidement et de manière explicite une forte quantité d'informations, ce qui nécessite un environnement de calcul assez lourd et créé des problèmes d'apprentissage et de fiabilité des traitements.

L'invention a pour but de proposer un procédé de reconnaissance de formes remédiant aux inconvénients précités, et comprenant une étape d'apprentissage permettant la reconnaissance d'une forme inconnue, même si celle-ci n'est pas tout-à-fait conforme à la forme de référence.

Le procédé trouve une application privilégiée dans la reconnaissance vocale du langage naturel multilocuteur en surmontant les problèmes provenant du bruit de fond et des difficultés d'identification d'un même son prononcé de façons différentes.

A cet effet, l'invention a pour objet un procédé de reconnaissance de formes comprenant une première étape d'apprentissage au cours de laquelle on mémorise une somme d'informations extraites de formes connues et l'on définit un seuil de reconnaissance et une deuxième étape consistant à comparer à ce seuil les informations extraites de la forme à reconnaître, caractérisé en ce que l'on transforme les informations extraites de formes connues et celles extraites de la forme à reconnaître en vecteurs normés et en ce que l'on applique au vecteur normé issu de la forme à reconnaître une formule sommatoire faisant intervenir tous les vecteurs issus d'exemples d'une même forme et qui permet la reconnaissance de la forme inconnue si la valeur obtenue est supérieure ou égale à la valeur du seuil de reconnaissance déterminé pendant l'apprentissage.

La formule sommatoire F utilisée est la suivante:

$$F = \sum_{i=1}^{i=k} \langle x, e_i \rangle^2$$

dans laquelle le symbole $\langle \ \rangle$ désigne un, produit scalaire, k désigne le nombre d'exemples de formes connues présentées au cours de l'apprentissage, x représente un vecteur norme calculé à partir de la forme à reconnaître, $e_i$ représente un vecteur normé calculé à partir des informations extraites du ième exemple d'une forme connue présentée au cours de l'apprentissage.

La valeur du seuil S est déterminée par la formule :

EP 0 428 449 A2

$$S = \sum_{i=1}^{i=k} p \langle s, e_i \rangle^2$$

dans laquelle s désigne la somme des vecteurs normés $e_i$, normalisée à 1, et p représente un coefficient de pondération déterminé expérimentalement et compris entre 0 et 1.

Avantageusement, on minimise le nombre de vecteurs à mémoriser pendant l'apprentissage en déterminant la matrice de corrélation C des vecteurs normés et calculés à partir des informations extraites des exemples des k formes connues présentées au cours de l'apprentissage, en calculant la trace de cette matrice de corrélation, cette trace étant égale à la somme des valeurs propres $\lambda_1$ à $\lambda_m$ de cette matrice, ces valeurs propres étant associées aux vecteurs propres normés $VP_1$...à $VP_m$, m étant la dimension de l'espace vectoriel constitué par les vecteurs $e_i$, en retenant les l premiers vecteurs qui satisfont à la relation :

$$\sum_{i=1}^{i=1} \lambda_i = n \sum_{i=1}^{i=m} \lambda_i$$

où n représente un coefficient de pondération déterminé expérimentalement et compris entre 0,9 et 1, puis en utilisant la formule sommatoire :

$$F = \sum_{i=1}^{i=1} \lambda_i \langle x, VP_i \rangle^2$$

et enfin en déterminant une valeur de seuil S égale à:

$$S = \sum_{i=1}^{i=1} \lambda_i \, p$$

où p représente un coefficient de pondération tel que défini précédemment.

Le réseau utilisé pour la mise en oeuvre du procédé selon l'invention est un réseau de neurones formels qui peut être réalisé soit sous forme logicielle, soit sous forme câblée.

Dans un mode de réalisation, le réseau de neurones comprend des entrées les recevant le vecteur normé issu de la forme à reconnaître, une première couche constituée par des neurones non interconnectés, chaque neurone correspondant à un vecteur normé et déterminé à partir du ième exemple de formes connues, ces neurones étant reliés aux entrées du réseau par des liaisons synaptiques dont le poids est égal, pour chaque entrée, à la coordonnée correspondante du vecteur $e_i$, et calculant le carré de la somme de leurs entrées pondérées, et une deuxième couche constituée par des neurones non interconnectés, chaque neurone correspondant à une forme à reconnaître, chacun étant relié, d'une part, aux neurones de la première couche correspondant aux vecteurs et associés à la forme à reconnaître par des liaisons synatiques dont le poids est égal à 1, et, d'autre part, à une sortie prenant la valeur 1 lorsque la somme des données reçues est égale ou supérieure au seuil de reconnaissance tel que défini précédemment, ou la valeur 0 lorsque cette somme est inférieure à ce seuil de reconnaissance.

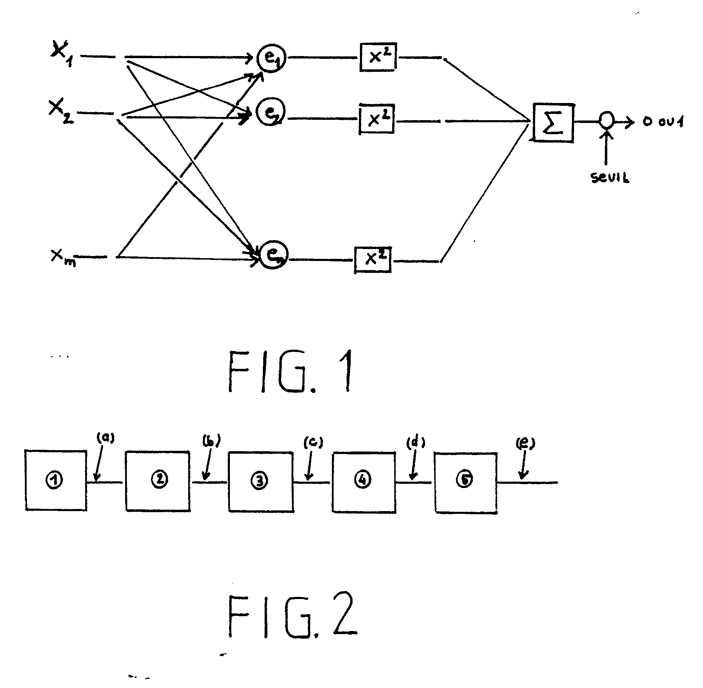

La figure 1 représente un tel réseau neuronal comprenant des entrées $x_1$ à $x_m$, une première couche de neurones $e_1$ à $e_n$, une deuxième couche de neurones $x$, et des sorties de valeur 0 ou 1, le réseau calculant des carrés $x^2$ et des sommes

Selon un autre mode de réalisation, le réseau de neurones est un réseau câblé réalisé avec des composants électroniques, tels que des amplificateurs opérationnels et des résistances dont les valeurs

4

sont calculées ou programmées à partir des vecteurs normés $e_i$ issus des exemples de formes onnues.

L'invention a également pour objet un dispositif destiné à la reconnaissance de formes.

Ce dispositif comprend un senseur, un ensemble câblé d'extraction des informations pertinentes et un réseau de neurones formels pour traiter et interpréter ces informations.

Le procédé de reconnaissance de formes tel que décrit ci-dessus peut être perfectionné en réalisant un apprentissage adaptatif avec facteur d'oubli.

Pour ce faire, on applique au vecteur normé issu de la forme à reconnaître la formule sommatoire F suivante :

$$F = \sum_{i=1}^{i=k} r_i \langle x, e_i \rangle^2$$

dans laquelle le symbole $< >$ désigne un produit scalaire, k désigne le nombre d'exemples de formes connues, $x$ et $e_i$ ont les mêmes significations que précédemment, $r_1$ à $r_k$ désignent des facteurs de pondération dégressifs suivant une loi judicieusement choisie.

La valeur du seuil S à laquelle on compare F est déterminée par la formule :

$$S = \sum_{i=1}^{i=k} p \, r_i \langle s, e_i \rangle^2$$

dans laquelle $r_i$, s, $e_i$ et p ont la même signification que précédemment.

On modifie la formule sommatoire F, si $x$ est reconnu, de la façon suivante :

$$\text{si F est supérieure à} \sum_{i=1}^{i=k} p' \, r_i \langle s, e_i \rangle^2$$

où $p'$ représente un coefficient de pondération déterminé expérimentalement, et compris entre p et 1, on remplace $e_1$ par $x$, $e_2$ par $e_1$ ....,$e_k$ par $e_{k-1}$ et $e_k$ est supprimé.

Pour l'application à la reconnaissance vocale multilocuteur, le procédé selon l'invention tend à imiter le fonctionnement de l'oeille humaine.

Le dispositif utilisé se compose d'un matériel simple d'analyse spectrale et temporelle des signaux sonores couplé à un réseau de neurones chargé de faire la reconnaissance et l'interprétation.

L'objectif recherché est la reconnaissance des phonèmes d'une langue donnée.

Les étapes ultérieures consistant à interpréter les phonèmes pour en faire des mots, puis des phrases ne seront pas traitées.

Le procédé d'apprentissage et de traitement des informations par un réseau selon l'invention repose sur une théorie mathématique dont les principes sont exposés ci-après.

Cette théorie fournit des outils permettant l'apprentissage en temps réel pour de grands réseaux.

Soit une série d'exemples qui sont des vecteurs à M composantes et qui représentent une connaissance que l'on cherche à reconnaître. Par exemple, n images successives de la lettre E digitalisée par un scanner. On cherche un circuit qui, au vu d'une autre image de la lettre E, reconnaîtrait la lettre en question.

A partir de ces exemples, on définit un circuit spécifique qui reconnaît les stimuli qui ont des caractéristiques communes aux exemples.

Si, au lieu de reconnaître une seule information, on veut en retrouver plusieurs, par exemple toutes les lettres, tous les phonèmes, il suffit de juxtaposer les circuits calculés pour reconnaître chaque information séparément.

Soit une série de vecteurs $e_1...e_n$ à M composantes représentant des exemples.

Ce sont des vecteurs de l'espace vectoriel E, de dimension m.

Soit la matrice des vecteurs ligne $e_1...e_n$.

$$\mathcal{M} = \begin{bmatrix} e_{11} & .... & e_{1m} \\ . & & \\ . & & \\ . & & \\ e_{n1} & .... & e_{nm} \end{bmatrix}$$

Soit C une matrice d'autocorrélation des exemples.

$C = M^t, M$ , qui est mxm.

C a pour propriété d'&tre une matrice réelle, symétrique, définie positive dont toutes les valeurs propres sont nulles ou positives et tous les vecteurs propres sont orthogonaux.

On note : $\lambda_1, \lambda_2, ... \lambda_m$ la suite décroissante des valeurs propres.

et $VP_1, VP_2,..., VP_m$ les vecteurs propres correspondants.

Soit $\times$ une entrée inconnue, que l 'on veut tester :

la fonction

$$f_1(x) = \sum_{i=1}^{i=m} \langle x, VP_i \rangle^2$$

représente la projection de $\times$ sur l'espace vectoriel engendré par $VP_1,...VP_m$, ou encore par $e_1,...e_n$.

Son maximum est : $\langle x, x \rangle$.

Cette fonction permet de tester la colinéarité de l'inconnue $\times$ avec les exemples présentés.

La fonction

$$f_2(x) = \sum_{i=1}^{i=m} \lambda_i \langle x, VP_i \rangle^2$$

représente la projection pondérée sur l'espace vectoriel engendré par $VP_1,...VP_m$, ou encore $e_1,...e_n$.

Son maximum est : $\lambda_1 (x,x)$.

Cette fonction permet de tester la ressemblance de $\times$ avec et ... .en. Elle prend un sens physique si $e_1,...e_n$ sont des exemples d'un même type de stimuli, donc si $e_1,...e_n$ se "ressemblent" déjà eux-mêmes.

La fonction la plus intéressante à utiliser est la fonction de transfert $x \rightarrow f_2(x)$, dans le cas de la reconnaissance de stimuli dont des exemples ont préalablement été présentés.

Le test de reconnaissance est le suivant :

$\times$ est reconnu si $f_2(x)) \geq \alpha \lambda_1 \langle x, x \rangle$

$\alpha$ étant un coefficient à déterminer expérimentalement.

$\times$ n'est pas reconnu dans le cas contraire.

Pour simplifier le test, on normalise $\times$ avant de le tester.

On ne traite, par conséquent, que des entrées normées.

Il est recommandé que les vecteurs représentant les exemples $e_1,...e_n$ soient eux aussi normés, pour éviter d'accorder aux différents exemples des importances différentes.

Le calcul de la fonction $f_2(x)$ peut être simplifié :

$$f_2(x) = \sum_{i=1}^{i=m} \lambda_i \langle x, VP_i \rangle^2$$

$$= x^t \; C \; x$$

$$= \sum_{1=1}^{1=n} \langle x, e_1 \rangle^2$$

Ce qui montre que les exemples présentés sont utilisables directement sans calculs.

Pour calculer le 2ème terme : $\alpha \, \lambda_1 \, \langle x, x \rangle$,

il suffit de prendre $x$ normé comme précédemment et de calculer un minorant de $\alpha \lambda_1$ par la méthode suivante :

On calcule pour chaque $e_1, \ldots e_n$ normé, la somme

$$S_i = \sum_{1=1}^{1=n} \langle e_i, e_1 \rangle^2$$

La plus petite de ces sommes est le minorant cherché. Soit $\beta$ ce minorant.

La formule de reconnaissance de $x$, définie par $x$

$$\text{reconnu} \Longleftrightarrow \sum_{1=1}^{1=n} \langle x, e_1 \rangle^2 \geq \beta$$

peut être câblée de manière représentée sur la figure 1.

Sur cette figure, on reconnaît un réseau de neurones ayant pour entrées $x_1 \ldots x_m$, pour neurone les vecteurs $e_i$ représentant les exemples, les poids de ces neurones étant égaux aux coordonnées des vecteurs $e_i$.

Le réseau calcule la fonction carrée $x^2$ de chacun des $x$, puis en fait la sommation et la compare au seuil. La sortie prend la valeur 0 ou 1.

On remarque que cette réalisation nécessite autant de neurones que d'exemples $e_i$ présentés.

Ce nombre de neurones diminue très sensiblement, si l'on calcule les valeurs et vecteurs propres, l'optimum étant atteint par l'utilisation de la relation :

$$x \text{ reconnu} \Longleftrightarrow \sum_{i=1}^{i=m} \lambda_i \langle x, VP_i \rangle^2 \geq \alpha \, \lambda_1 \langle x, x \rangle$$

où $\alpha \lambda_1$ est égal à $\beta$.

On n'a pas cherché à obtenir un réseau de neurones, mais celui-ci est apparu de façon naturelle comme l'interprétation physique d'une formule de projection linéaire d'une entrée à tester sur l'espace vectoriel des exemples.

Par conséquent, les problèmes posés par l'apprentissage itératif disparaissent, la méthode permettant le calcul direct des poids.

La possibilité d'utiliser les exemples tels quels pour faire les poids donne la capacité d'apprendre en temps réel, puisque la plupart des calculs n'ont plus lieu d'être.

La résolution optimale par utilisation des composantes principales (valeurs et vecteurs propres) permet d'utiliser le réseau pour reconnaître des entrées incomplètes. Une entrée incomplète peut être reconstituée.

L'utilisation de ce type de formule pour faire de la reconnaissance suppose qu'on sait extraire d'un stimuli à reconnaître des composantes qu'on fait agir sur le réseau. L'étape de sélection des bonnes composantes à tester dépend du problème de reconnaissance posé.

D'autres caractéristiques et avantages de l'invention apparaîtront dans la description suivante d'exemples non limitatifs.

EXEMPLE 1 :

Le premier exemple concerne un procédé de reconnaissance vocale multilocuteur.

Le dispositif utilisé est calqué sur le fonctionnement de l'oreille humaine, volontairement simplifié.

Il se compose schématiquement d'un ensemble chargé de décomposer, de façon assez grossière, le son en ses composantes fondamentales, et d'un réseau de neurones chargé d'interpréter ces composantes pour en déduire la teneur du son analysé, c'est-à-dire le phonème qu'il représente.

Le réseau comporte une assez grande quantité de neurones, de l'ordre du millier.

Si l'on étudie les différentes fonctions de l'oreille, on trouve parmi elles :

- la réception et la transmission de l'information effectuées par le pavillon, le conduit auditif, l'oreille moyenne et interne,
- la transformation des sons en signaux auditifs par les cellules sensitives,

Il s'agit d'une analyse fréquentielle : l'amplitude est analysée sur un ensemble de fréquences.

- l'interprétation des signaux par la zone cervicale.

La valeur de certaines constantes physiologiques donne des indications quant au fonctionnement de l'oreille; ces constantes seront utiles pour régler correctement le procédé de reconnaissance.

En particulier, on trouve :

- spectre des fréquences entendues : 50 - 20 000 Hz
- spectre vocal : 200 (env) - 5 000 Hz = spectre "utile"
- temps de réponse des cellules sensitives : de l'ordre de la ms.

Ce temps est compatible avec une décomposition fréquentielle puisqu'une milliseconde est égale à 3 périodes à 3 KHz.

- temps de réponse d'un neurone : 1,5 ms environ

transmission de neurone à neurone : 0,5 ms environ.

- échantillonnage physiologique de l'ordre de 10 ms (valeur maximale) ; si cette valeur est supérieure, on ne peut faire, pour les fréquences basses, la différence entre la présence ou l'absence de signal. Par conséquent, la reconnaissance d'un son élémentaire exige une durée de l'ordre de la dizaine de ms, ce qui ne signifie pas que la reconnaissance active faite par les niveaux supérieurs exige le même temps.

En conséquence, il est raisonnable de penser que 3 ou 4 couches de neurones suffisent à la reconnaissance élémentaire.

Les couches de neurones doivent être remises à zéro pour empêcher que la reconnaissance d'un son ne soit altérée par celle des précédents. Ceci suppose un fonctionnement de type hâché, de période au moins égale à 6 ms.

Les durées ci-dessus sont incompatibles avec celles des mots, trop longs, mais restent cohérentes avec un découpage de sons élémentaires en un nombre d'échantillons de l'ordre de la dizaine.

Le nombre d'échantillons et la périodicité peuvent varier en fonction de la nature (fréquence, variabilité, évolution temporelle) des signaux à reconnaître.

Les fréquences contenant l'information à analyser et à interpréter sont dans l'intervalle compris entre 300 et 5000 Hz.

La parole est une succession de phonèmes séparés ou non par des silences, chaque phonème donnant une image acoustique différente de celles des autres phonèmes. Une image acoustique est définie par un diagramme temps/fréquence ou sonogramme qui trace l'évolution au cours du temps du spectre sonore, celui-ci prenant une forme bien particulière en fonction du phonème émis.

Le problème posé par la reconnaissance de la parole est d'identifier en temps réel une suite d'images acoustiques , c'est-à-dire de comparer rapidement chaque image acoustique correspondant au son qui vient d'être reçu avec toutes celles que l'on connaît et qui sont disponibles en mémoire

Les handicaps à lever sont les suivants :

- pas de constance des sonogrammes en fonction du temps : un même locuteur peut parler plus ou moins vite, haut, fort, à un rythme plus ou moins hâché.

- plusieurs phonèmes peuvent donner des sonogrammes qui se ressemblent.
- les phonèmes sont déformés car en même temps qu'ils sont émis la bouche prépare l'émission du phonème suivant.

Il n'y a pas indépendance vis-à-vis du contexte.
- la quantité d'informations à traiter est très importante, ce qui oblige à prévoir une forte puissance de calcul.

Une analyse strictement temporelle par échantillonnage du signal reçu avec une périodicité minimale de 100 µs produit beaucoup d'informations. Une analyse temps/fréquence basée sur l'examen spectral répété toutes les 10 ms produit environ 10 fois moins d'informations à traiter, à contenu utile équivalent.

Le dispositif utilisé se compose d'éléments réalisant les fonctions décrites et représentées sur le diagramme de la figure 2.

La fonction 1 est la réception.

Il s'agit, par exemple, d'un simple microphone relié à un amplificateur.

La réception et l'amplification sont effectuées en qualité standard dans un domaine de fréquences compris entre 50 et 10 000 Hz.

En (a), on obtient le signal électrique brut correspondant au son.

La fonction 2 est l'analyse spectrale.

Elle consiste à faire suivre l'ensemble d'une batterie de filtres passe-bande suivis d'un redresseur, de façon à obtenir rapidement pour chaque fréquence l'amplitude correspondante.

Les fréquences à prendre en considération sont au nombre de 10 à 15, environ. Un découpage plus fin n'est pas utile au vu de l'allure des sonogrammes pouvant être obtenus pour les différents types de sons.

Elles sont comprises entre 200 et 5 000 Hz.

On choisira, par exemple, des fréquences égales à 200, 280, 400, 565, 800, 1 130, 1 600, 2 260, 3 400, 4 500 Hz.

Les valeurs ci-dessus n'ont pas besoin d'être atteintes avec précision.

L'ordre des filtres n'a pas besoin d'être élevé. Des filtres d'ordre quatre suffisent. Une certaine agrégation des fréquences doit être faite pour éliminer les glissements en fréquence, inévitables selon le locuteur. Cette agrégation a lieu du fait du recoupement des filtres.

On obtient en (b) les composantes spectrales sur les différentes fréquences, sous forme de signaux positifs.

La fonction 3 est l'échantillonnage des signaux (b). L'échantillonnage est réalisé par une conversion analogique/numérique des signaux (b) permettant l'obtention d'un vecteur à k composantes, et par une mise en mémoire successive de ces vecteurs échantillonnés à des intervalles de temps $\tau$ , $\tau$ étant un temps fixe, de l'ordre de 2 ms.

Une image acoustique pour un son ou phonème donné est obtenue par la juxtaposition d'un certain nombre de vecteurs qui forment une matrice. Pour obtenir la matrice correspondant à un son élémentaire, il faut cadrer le début et la fin du son. On cherche ces indications en calculant la corrélation de plusieurs de ces vecteurs successifs. On se trouve au début ou à la fin d'un son élémentaire lorsque cette corrélation est minimale.

La fonction 4 est l'adaptation et la normalisation des signaux (c) obtenus après échantillonnage.

Cette fonction est réalisable par un logiciel.

La matrice obtenue précédemment est de dimension k × l, avec k connu (10 à 15) et l variable et dépendant du son élémentaire considéré.

On extrait de cette matrice m informations en faisant une somme pondérée sur m groupements de cette matrice, de façon à atteindre les objectifs suivants :
- diminuer le nombre d'informations à traiter :
m est inférieur à k × 1,
- diminuer l'influence des glissemnts de temps ou de fréquences : la définition des m groupements est indépendante de la matrice initiale,
- diminuer l'influence des bruits par des recouvrements sur les groupements,
- normaliser en pondérant les groupements afin que leur importance moyenne dans le vecteur de m informations obtenu soit identique.

Enfin, ce vecteur à m composantes est normalisé et constitue l'entrée (d) de la fonction 5.

La fonction 5 est le traitement neuronal qui aboutit au signal (e).

Il s'effectue en 2 étapes : l'apprentissage suivi de la reconnaissance.

En ce qui concerne la reconnaissance dont le fonctionnement est le plus simple, le réseau est la réalisation pratique, qui peut être informatisée sous forme d'un simple calcul vectoriel, de la formule de

reconnaissance

$$x \text{ est reconnu}$$

$$\text{si} \quad \sum_{l=1}^{n} \langle x, e_l \rangle^2 \leq \inf_{i} \left( \sum_{l=1}^{n} \langle e_i, e_l \rangle^2 \right)$$

où $x$ et $e$ ont les mêmes significations que précédemment.

En pratique, on ne calcule pas le 2ème terme, on se borne à sortir le phonème correspondant à chaque instant à la sortie la plus forte du réseau, si celle-ci dépasse un seuil de vigilance à fixer expérimentalement, de l'ordre de 0.9 à 0.95. Les normalisations nécessaires sont faites pendant l'étape d'apprentissage.

Dans une réalisation informatisée, on calcule :

$$S = \sum_{l=1}^{n} \langle x, e_l \rangle^2 \times \text{Normalisation}$$

La sortie vaut 1 si $S$ est supérieure ou, égale au seuil de vigilance et 0, si $S$ est inférieure à ce seuil.

Les vecteurs $e_1, ... e_l$ représentent les exemples des réceptions obtenues pour un phonème donné, par exemple 5 ou 6 prononciations différentes d'un son. Ces exemples doivent être choisis au moment idoine parmi les composantes $x_1, ... x_m$ au moment où l'on prononce.

Lorsqu'une sortie fournit le résultat 1, on fait apparaître le phonème reconnu, ou bien on le transmet à une couche de traitement chargée de reconnaître les mots, puis les phrases.

L'apprentissage s'effectue de la manière exposée ci-après.

On conduit l'apprentissage en répétant chaque phonème plusieurs fois (de 5 à 10 fois), de façon que les variations effectives soient prises en compte. Les prononciations peuvent &tre effectuées par plusieurs locuteurs. Les phonèmes peuvent être préalablement enregistrés sur une bande magnétique.

L'apprentissage, réalisé en une seule fois, consiste à :
- déterminer la matrice (image acoustique du phonème) à partir de laquelle on extrait le vecteur d'informations de dimension m précédemment mentionné. Les phonèmes ont été prononcés séparément de sorte que la recherche de début et de fin d'image se fasse aisément,
- mémoriser le vecteur d'informations, préalablement normé.

Après mémorisation de quelques exemples $(e_1, ... e_n)$, on calcule pour chaque exemple $i$ la valeur :

$$S_i = \sum_{l=1}^{n} \langle e_i, e_l \rangle^2 .$$

Le coefficient de normalisation cherché est le maximum des valeurs $S_i$ afin que la sortie maximale du réseau pour le phonème considéré vaille 1.

La taille du réseau peut être diminuée, si, lors de l'apprentissage, on calcule les vecteurs propres et les valeurs propres des matrices de corrélation des phonèmes, et si, on les utilise pour concevoir les neurones, afin' de diminuer la quantité de calculs.

Les opérations du réseau étant suffisamment simples, on peut envisager un composant câblé, c'est-à-dire un composant spécifique à base de résistances et d'amplificateurs pouvant simuler plusieurs milliers de neurones par centimètre carré.

EXEMPLE 2 :

Le deuxième exemple concerne un procédé de reconnaissance de caractères manuscrits séparés.

Il s'agit d'un logiciel qui accepte des fichiers issus d'un logiciel de dessin et contenant des dessins effectués à l'aide d'une souris, ou par tout autre moyen, et représentant des lettres manuscrites.

Le fichier est transformé en un tableau de pixels comprenant dans l'exemple réalisé 200 lignes et 320 colonnes. Cette étape peut être avantageusement effectuée à l'aide d'un scanner.

Le tableau est exploré dans le but d'en extraire une forme qui est introduite dans une matrice M (k, l) de dimensions variables suivant la forme considérée.

On transforme la matrice M (k, l) en une matrice (7,7) par un découpage en zones, et par sommation du contenu de ces zones avec interpolation linéaire.

On obtient ainsi un vecteur d'informations de 49 composantes.

Le procédé de reconnaissance est mis en oeuvre de la manière suivante :
- l'apprentissage s'effectue en associant au vecteur d'informations la lettre à reconnaître, pour tous les exemples présentés qui sont ainsi mémorisés,
- la reconnaissance est réalisée en appliquant la formule sommatoire, mentionnée précédemment, au fichier des vecteurs d'informations précédemment mémorisés.

Les variantes du procédé de reconnaissance sont nombreuses, étant donné que ce procédé est applicable à toute forme à partir de laquelle on peut extraire un vecteur d'informations pertinentes.

Ces formes peuvent Qtre des signaux sonores, radar, visuels ou autres.

## Revendications

1.- Procédé de reconnaissance de formes comprenant une première étape d'apprentissage au cours de laquelle on mémorise une somme d'informations extraites de formes connues et l'on définit un seuil de reconnaissance et une deuxième étape consistant à comparer à ce seuil les informations extraites de la forme à reconnaître, caractérisé en ce que l'on transforme les informations extraites de formes connues et celles extraites de la forme à reconnaître en vecteurs normés et en ce que l'on applique au vecteur normé issu de la forme à reconnaître une formule sommatoire faisant intervenir tous les vecteurs issus d'exemples d'une même forme et qui permet la reconnaissance de la forme inconnue si la valeur obtenue est supérieure ou égale à la valeur du seuil de reconnaissance déterminé pendant l'apprentissage.

2.- Procédé selon la revendication 1, caractérisé en ce que la formule sommatoire F utilisée est la suivante :

$$F = \sum_{i=1}^{i=k} \langle x, e_i \rangle^2$$

dans laquelle le symbole $\langle \rangle$ désigne un produit scalaire, k désigne le nombre d'exemples de formes connues présentées au cours de l'apprentissage, x représente un vecteur normé calculé à partir de la forme à reconnaître, $e_i$ représente un vecteur normé calculé à partir des informations extraites du ième exemple d'une forme connue présentée au cours de l'apprentissage,
et en ce que la valeur du seuil S est déterminée par la formule :

$$S = \sum_{i=1}^{i=k} p \langle s, e_i \rangle^2$$

dans laquelle s désigne la somme des vecteurs normés $e_i$, normalisée à 1, et p représente un coefficient de pondération déterminé expérimentalement et compris entre 0 et 1.

3.- Procédé selon la revendication 1 ou 2, caractérisé en ce que l'on minimise le nombre de vecteurs à mémoriser pendant l'apprentissage de la façon suivante :

a) on détermine la matrice de corrélation C des vecteurs normés $e_i$ calculés à partir des informations extraites des exemples des k formes connues présentées au cours de l'apprentissage,

b) on calcule la trace de cette matrice de corrélation, cette trace étant égale à la somme des valeurs propres $\lambda_1$, à $\lambda_m$ de cette matrice, ces valeurs propres étant associées aux vecteurs propres normés $VP_1$...à $VP_m$, m étant la dimension de l'espace vectoriel constitué par les vecteurs $e_i$,

c) on retient les 1 premiers vecteurs qui satisfont à la relation

$$\sum_{i=1}^{i=1} \lambda_i = n \sum_{i=1}^{i=m} \lambda_i$$

où n représente un coefficient de pondération déterminé expérimentalement et compris entre 0,9 et 1
d) on utilise la formule sommatoire

$$F = \sum_{i=1}^{i=1} \lambda_i \langle x, VP_i \rangle^2$$

e) on détermine une valeur de seuil S égale à

$$S = \sum_{i=1}^{i=1} \lambda_i \; p$$

où p représente un coefficient de pondération tel que défini dans la revendication 2.

4.- Procédé selon l'une des revendications 1 à 3, caractérisé en ce que le traitement et l'interprétation des informations sont effectués par un réseau de neurones formels comprenant des entrées recevant le vecteur normé issu de la forme à reconnaître, une première couche constituée par des neurones non interconnectés, chaque neurone correspondant à un vecteur normé $e_i$ déterminé à partir du ième exemple de formes connues, ces neurones étant reliés aux entrées du réseau par des liaisons synaptiques dont le poids est égal, pour chaque entrée, à la coordonnée correspondante du vecteur $e_i$, et calculant le carré de la somme de leurs entrées pondérées, et une deuxième couche constituée par des neurones non interconnectés, chaque neurone correspondant à une forme à reconnaître, chacun étant relié, d'une part, aux neurones de la première couche correspondant aux vecteurs $e_i$ associés à la forme à reconnaître par des liaisons synaptiques dont le poids est égal à 1, et, d'autre part, à une sortie prenant la valeur 1 lorsque la somme des données reçues est égale ou supérieure au seuil de reconnaissance tel que défini dans la revendication 2, ou la valeur 0 Lorsque cette somme est inférieure à ce seuil de reconnaissance.

5. - Procédé selon l'une quelconque des revendications précédentes, caractérisé en ce que le traitement et l'interprétation des informations sont effectués par un réseau câblé réalisé avec des composants électroniques tels que des amplificateurs opérationnels et des résistances dont les valeurs sont calculées ou programmées à partir des vecteurs normés $e_i$ issus des exemples de formes connues.

6. - Dispositif destiné à la reconnaissance de formes selon le procédé défini dans les revendications précédentes, caractérisé en ce qu'il comprend un senseur, un ensemble câblé d'extraction des informations pertinentes et un réseau de neurones formels pour traiter et interpréter ces informations.

7. - Dispositif destiné à la reconnaissance des phonèmes du langage naturel, caractérisé en ce qu'il comprend les éléments suivants : un ensemble de réception et d'amplification des sons, un ensemble assurant l'analyse spectrale en temps réel grâce à des fitres passe-bandes ajustables suivis d'un redresseur permettant d'obtenir pour chaque fréquence l'amplitude correspondante, un ensemble d'échantillonnage destiné à lire les informations issues de l'étape précédente à des intervalles de temps constants, la période d'échantillonnage, déterminée expérimentalement, étant comprise entre 2 et 10 millisecondes, un ensemble d'adaptation et de normalisation des informations lues précédemment et un ensemble de traitement par des neurones formels.

8. - Procédé de reconnaissance de formes selon la revendication 1, caractérisé en ce que :
a) on réalise un apprentissage adaptatif avec facteur d'oubli en appliquant au vecteur normé issu de la forme à reconnaître la formule sommatoire F suivante :

$$F = \sum_{i=1}^{i=k} r_i \langle x, e_i \rangle^2$$

dans laquelle le symbole $\langle\ \rangle$ désigne un produit scalaire, k désigne le nombre d'exemples de formes connues, $x$ et $e_i$ ont les mêmes significations que dans la revendication 2, $r_1$ à $r_k$ désignent des facteurs de pondération dégressifs suivant une loi judicieusement choisie,

b) la valeur du seuil S est déterminée par la formule :

$$S = \sum_{i=1}^{i=k} p\ r_i \langle s, e_i \rangle^2$$

dans laquelle $r_i$ a la même signification que précédemment et s, $e_i$ et p ont la même signification que dans la revendication 2,

c) on modifie la formule sommatoire F, si $x$ est reconnu, de la façon suivante :

$$si\ F\ est\ supérieure\ à \quad \sum_{i=1}^{i=k} p'r_i \langle s, e_i \rangle^2\ où\ p'$$

représente un coefficient de pondération déterminé expérimentalement, et compris entre p et 1,

d) on remplace $e_1$ par $x$, $e_2$ par $e_1$..., $e_k$ par $e_{k-1}$ et $e_k$ est supprimé.

FIG. 1

FIG. 2